(19) Europäisches Patentamt / European Patent Office / Office européen des brevets

(11) **EP 3 013 551 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **14733133.4**

(22) Anmeldetag: **20.06.2014**

(51) Int Cl.:
***B29C 47/08*** *(2006.01)* ***B29C 47/40*** *(2006.01)*
***B29C 47/60*** *(2006.01)* ***B29B 7/48*** *(2006.01)*

(86) Internationale Anmeldenummer:
**PCT/EP2014/062981**

(87) Internationale Veröffentlichungsnummer:
**WO 2014/206865 (31.12.2014 Gazette 2014/53)**

(54) **SCHNECKENELEMENTE FÜR MEHRWELLIGE SCHNECKENMASCHINEN UND VERFAHREN ZU DEREN HERSTELLUNG**

SCREW ELEMENTS FOR MULTI-SCREW MACHINES AND METHOD OF PRODUCING SAME

ÉLÉMENTS DE VIS POUR LES MACHINES MULTI-VIS ET LEUR PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2013 EP 13173337**

(43) Veröffentlichungstag der Anmeldung:
**04.05.2016 Patentblatt 2016/18**

(73) Patentinhaber: **Covestro Deutschland AG**
**51373 Leverkusen (DE)**

(72) Erfinder: **KÖNIG, Thomas**
**51375 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 0 002 131**
**EP-A2- 1 093 905**
**WO-A1-2011/073181**
**DE-A1-102008 029 303**
**DE-A1-102009 057 139**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 013 551 B1

## Beschreibung

Die Erfindung betrifft Schneckenelemente für mehrwellige Schneckenmaschinen mit paarweise gleichsinnig drehenden Schneckenwellen, die Verwendung der Schneckenelemente in mehrwelligen Schneckenmaschinen, ein Verfahren zur Extrusion plastischer Massen unter Verwendung dieser Schneckenelemente sowie ein Verfahren zur Erzeugung der Schneckenelemente.

Gleichsinnig drehende Zwei- oder ggf. Mehrwellenmaschinen, deren Rotoren sich gegenseitig exakt abschaben, sind bereits seit langem bekannt (siehe z.B. DE 862 668 C). In der Polymerherstellung und -verarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in [1] ([1] = Klemens Kohlgrüber: "Der gleichläufige Doppelschneckenextruder", Hanser Verlag München 2007, Seiten 96 - 109) dargestellt. Hier wird auch beschrieben, dass ein vorgegebenes Schneckenprofil auf der ersten Welle eines Doppelschneckenextruders das Schneckenprofil auf der zweiten Welle des Doppelschneckenextruders bestimmt ([1], Seite 97). Das Schneckenprofil auf der ersten Welle wird daher als das erzeugende Schneckenprofil bezeichnet. Das Schneckenprofil auf der zweiten Welle folgt aus dem Schneckenprofil der ersten Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt. Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen.

Im Stand der Technik sind Schneckenelemente bekannt, bei denen ein Knick im Querschnittprofil am Schneckenkamm auftritt und einen abrupten Übergang zur Gewindeflanke bildet, wobei der Kamm aus einem Kreisbogen mit Radius = Außendurchmesser des Profils besteht, mit dem Drehpunkt des Profils als Mittelpunkt. Dieser Knick am Übergang zur Flanke des Profils bildet auf dem Schneckenelement eine Kante. Eine der wesentlichen Aufgaben, die auf Mehrwellenmaschinen durchgeführt werden, ist das Dispergieren von flüssigen Phasen oder Schmelzen, die nicht homogen ineinander mischbar sind oder das Dispergieren von Feststoffen in Polymerschmelzen. Aus der technischen Literatur ist bekannt (siehe z.B. Chang Dae Han: "Multiphase Flow in Polymer Processing", Academic Press, New York 1981), dass eine Kombination aus Scherströmung und Dehnströmung für schwierige Dispergieraufgaben optimal ist. Eine solche Strömungsform liegt in einem Schneckenkanal vor, wo die Masse einerseits durch die Rotation der Wellen geschert und andererseits durch die Konvergenz des Schneckenkanals zum Kamm hin gleichzeitig gedehnt wird. Im Bereich des Schneckenkammes liegt allerdings eine reine Scherströmung vor, die bei schwierigen Dispergieraufgaben kaum zur Dispergierung beitragen wird. Andererseits wird im Spalt zwischen dem Schneckenkamm und dem Gehäuse beziehungsweise der Nachbarwelle der größte Teil der eingetragenen Energie dissipiert. Deshalb trägt dieser Bereich maßgeblich zur Erhitzung der Polymermasse und damit potentiell zur thermischen Schädigung bei, ohne einen Beitrag zur Verfahrensaufgabe der Dispergierung zu leisten. Eine Ausnahmestellung haben exzentrisch angeordnete Kreisscheiben, die bekanntermaßen exakt abschabend angeordnet werden können. Sie weisen keinen Kammbereich mit reiner Scherströmung auf. Sie sind für ihre exzellente Dispergierwirkung bekannt, weisen aber ebenfalls eine hohe Energieeinleitung auf, weil sie über einen großen Umfangsbereich einen sehr engen Spalt erzeugen. Ferner sind sie auf eine Gangzahl Z = 1 beschränkt.

Die internationalen Patentanmeldungen WO 2009/152968 A1 und WO 2011/069896 A1, deren gesamter Inhalt hiermit durch Verweis in der vorliegenden Anmeldung einbezogen ist, beschreiben auch Schneckenelemente für mehrwellige Schneckenmaschinen mit paarweise gleichsinnigen Schneckenwellen. Diese Schneckenelemente wurden entwickelt, dass sie Profile im axialen Querschnitt aufweisen, die durch stetig differenzierbare Profilkurven darstellbar sind, um der obigen Problematik zu begegnen. Allerdings wurde eine optimale Leistung der Schneckenelemente auf allen Anwendungsgebieten damit noch nicht erreicht.

Die europäische Patentanmeldung EP 1093905 A2, die unter anderem Doppelschneckenextruder offenbart, geht bereits auf das Problem der Vermeidung der dissipativen Erwärmung des zu extrudierenden Materials bei hoher dispersiver und distributiver Mischwirkung ein, bietet jedoch nur eine unzureichende Lösung.

Auch die deutsche Patentanmeldung DE 102008026862 A1 beschäftigt sich mit der Verbesserung der dispersiven und distributiven Mischwirkung bei Mehrwellenextrudern, geht aber nicht auf das Problem der dissipativen Erwärmung des zu extrudierenden Materials ein.

In der europäischen Patentanmeldung EP 0875356 A2 wird zwar einerseits auf eine Verbesserung der dispersiven und distributiven Mischwirkung bei Mehrwellenextrudern, andererseits auf eine schonende Verarbeitung abgehoben, jedoch nicht auf eine Verbesserung der dispersiven und distributiven Mischwirkung in Verbindung mit einer schonenden Verarbeitung.

Die europäische Patentanmeldung EP 0002131 A1 offenbart Mehrwellenextruder mit verbesserter Knetwirkung auf Kunststoffen. Diese Patentanmeldung geht aber weder auf die Verbesserung der dispersiven oder distributiven Mischwirkung ein, noch geht sie auf das Problem der dissipativen Erwärmung des zu extrudierenden Materials ein.
Die internationale Patentanmeldung WO 2001/006516 A1 offenbart Mehrwellenextruder mit verbesserter dispersiver Mischwirkung. Jedoch geht auch diese Patentanmeldung nicht auf das Problem der dissipativen Erwärmung des zu extrudierenden Materials ein. Die deutsche Patentanmeldung DE102008029303 offenbart Schneckenelemente mit hoher Dispergierwirkung und geringem Energieeintrag. Ausgehend vom Stand der Technik stellt sich daher die Aufgabe, Schneckenelemente für mehrwellige Schneckenmaschinen bereitzustellen, die bei möglichst geringer Energieeinleitung eine gegenüber dem Stand der Technik verbesserte Dispergierwirkung aufweisen.
Die Lösung der Aufgabe erfolgt erfindungsgemäß durch Schneckenelemente für mehrwellige Schneckenmaschinen mit den Merkmalen des Anspruchs 1 und durch ein Verfahren zur Erzeugung dieser Schneckenelemente mit den Merkmalen des Anspruchs 10,. Bevorzugte Ausgestaltungen und Anwendungen der Erfindung sind in den Unteransprüchen und weiteren unabhängigen Ansprüchen angegeben.
Überraschend wurde gefunden, dass die Aufgabe durch Schneckenelemente für mehrwellige Schneckenmaschinen mit paarweise gleichsinnig drehenden Schneckenwellen gelöst wird, wobei diese Schneckenelemente paarweise exakt abschabend sind und aus diesen Schneckenelementen zusammengesetzte Schneckenwellen zwei oder mehr Schneckengänge aufweisen und das Profil der Schneckenelemente über den gesamten Querschnitt durch eine Profilkurve darstellbar ist, die nicht stetig differenzierbare ist, sondern einen Knick in ihrem Verlauf aufweist, der innerhalb eines Außenradius der Profilkurve liegt, wobei das Verhältnis eines Krümmungsradius des Schneckenprofils zum Außenradius des Profils an dem Punkt $P_A$, der das Gehäuse abreinigt, 0,2 bis 0,8 beträgt, und das Verhältnis vom Außenradius ra des Schneckenelements zum Achsabstand a für zweigängige Schneckenelemente zwischen 0,54 und 0,7, für dreigängige Schneckenelemente zwischen 0,53 und 0,57, sowie für viergängige Schneckenelemente zwischen 0,515 und 0,535 beträgt. Der Knick gilt als eine Stelle der abrupten Steigungsänderung oder der geometrischen Unstetigkeit in der Steigung der Profilkurve. Ferner bedeutet der Begriff "innerhalb eines Außenradius der Profilkurve", dass der Knick nicht am Außenradius der Profilkurve liegt, sondern an einer Stelle mit einem Radius, der vom Drehpunkt bzw. von der Drehachse des jeweiligen Schneckenelements aus kleiner ist, als der Außenradius der Profilkurve.

In einer bevorzugten Ausführungsform der Erfindung beträgt das Verhältnis des Krümmungsradius des Schneckenprofils zum Außenradius des Profils 0,3 bis 0,7, besonders 0,35 bis 0,65. Dies gilt insbesondere an dem Punkt $P_A$, der das Gehäuse abreinigt. Falls die Profilkurve aus verschiedenen Funktionen abschnittsweise zusammengesetzt ist, kann der Krümmungsradius ggf. unstetig verlaufen, d.h. die Grenzwerte des Kurvenradius für Werte bei Annäherung an einen Punkt in einer Drehrichtung ist anders als bei Annäherung an einen Punkt in der entgegengesetzten Drehrichtung. Ist ein solcher Übergang gerade bei dem Außenradius des Profils, so gelten die bevorzugten Bereiche bevorzugt für mindestens einen der beiden Grenzwerte.

Gegenstand der Erfindung sind daher Schneckenelemente für mehrwellige Schneckenmaschinen mit paarweise gleichsinnig drehenden Schneckenwellen, wobei diese Schneckenelemente paarweise exakt abschabend sind und aus diesen Schneckenelementen zusammengesetzte Schneckenwellen zwei oder mehreren Schneckengänge aufweisen, wobei das erzeugende und das erzeugte Schneckenprofil über den gesamten Querschnitt jeweils durch eine Profilkurve darstellbar sind, die mindestens einen Knick oder eine geometrische Unstetigkeit in der Steigung der Profilkurve aufweist, dadurch gekennzeichnet, dass der mindestens eine Knick-Stelle in ihrem Verlauf aufweist, die innerhalb eines Außenradius der Profilkurve liegt, wobei das Verhältnis eines Krümmungsradius des Schneckenprofils zum Außenradius des Profils an dem Punkt $P_A$, der das Gehäuse abreinigt, 0,2 bis 0,8 beträgt, und das Verhältnis vom Außenradius ra des Schneckenelements zum Achsabstand a für zweigängige Schneckenelemente zwischen 0,54 und 0,7, für dreigängige Schneckenelemente zwischen 0,53 und 0,57, sowie für viergängige Schneckenelemente zwischen 0,515 und 0,535 beträgt. Die erfindungsgemäßen Schneckenelemente sollen sich stets in mindestens einem Punkt bei gleichsinniger Rotation mit gleicher Drehzahl um zwei, in einem Abstand a parallel zueinander angeordnete Drehachsen berühren.

Dabei ist die Erfindung nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen. Obwohl der mindestens eine Knick eine Kante im Profil des Schneckenelements bildet, liegt er nicht am Schneckenkamm sondern ist radial nach innen versetzt, so dass er zur Dispergierung der Polymer-Masse beitragen kann, ohne einen erheblichen Beitrag zur deren Erhitzung zu leisten.

In einer bevorzugten Ausführungsform der Erfindung lassen sich die Querschnittsprofile (im Folgenden kurz Profile oder auch Schneckenprofile genannt) der erfindungsgemäßen Schneckenelemente über ihren gesamten Verlauf abgesehen von dem besagten mindestens einen Knick durch eine stetig differenzierbare Kurve darstellen. Vorzugsweise werden die Abschnitte der stetig differenzierbaren Profilkurven durch das in der WO 2011/069896 A1 beschriebene Verfahren erzeugt.

Wie oben bereits mit Bezug auf das erzeugende und das erzeugte Schneckenprofil erwähnt, kann das Querschnittsprofil eines Schneckenelements vorgeben werden, wobei sich das Querschnittsprofil des anderen Schneckenelements aus diesem vorgegebenen Profil einfach ableiten lässt. Die Schneckenprofile bzw. Schneckenelemente werden

hier der Einfachheit halber auch als korrespondierende Profile bzw. Elemente bezeichnet. Dabei muss das erzeugende oder vorzugebende Profil nur wenige, einfach zu realisierende Kriterien erfüllen. Die Ableitung oder die Erzeugung des Profils des korrespondierenden Schneckenelements erfolgt auf einfache Weise entweder zeichnerisch oder rechnerisch. Dies ermöglicht die Konstruktion einer außerordentlichen Vielfalt an korrespondierenden Schneckenelementen. Ein Kurve, die das Querschnittsprofil eines Schneckenelements beschreibt, muss die folgenden Kriterien erfüllen, damit sich aus der Kurve ein Querschnittsprofil eines korrespondierenden Schneckenelements erzeugen lässt: die Kurve muss geschlossen sein, die Kurve muss stetig sein, die Kurve muss konvex sein, die Kurve muss abschnittsweise stetig differenzierbar sein und die Kurve muss in jedem Punkt einen Krümmungsradius aufweisen, der kleiner oder gleich dem Achsabstand a zwischen den Schneckenelementen ist.

In einer bevorzugten Ausführungsform der Erfindung wird das erzeugende Querschnittsprofil des einen Schneckenelements in einer Ebene durch eine stetige, abschnittsweise stetig differenzierbare, geschlossene, konvexe Kurve $\vec{p}$ und das erzeugte Querschnittsprofil des anderen Schneckenelements aus der Kurve $\vec{q}$ gemäß der folgenden Beziehung (1) gebildet:

$$\vec{q} = \vec{p} + \mathrm{a} \cdot \vec{n}(\vec{p}) + \vec{a} \qquad (1),$$

wobei

- die Kurve $\vec{p}$ in jedem Punkt einen Krümmungsradius $\rho$ aufweist, der kleiner oder gleich dem Achsabstand a der Schneckenelemente ist,
- für jeden Punkt der Kurve $\vec{p}$ innerhalb eines stetig differenzierbaren Abschnitts ein normierter Normalenvektor $\vec{n}(\vec{p})$ mit der Länge 1 existiert, der in dem jeweiligen Punkt senkrecht auf der Tangente zur Kurve $\vec{p}$ steht und in Richtung des Mittelpunktes des zum jeweiligen Punkt der Kurve $\vec{p}$ gehörigen Krümmungskreises zeigt,
- $\vec{a}$ ein Vektor ist, der in Richtung vom Drehpunkt des erzeugenden Profils zum Drehpunkt des erzeugten Profils in der Querschnittsebene führt und die Länge a hat.

In diesem Zusammenhang kann die Kurve $\vec{p}$ abschnittsweise durch eine einzige mathematische Funktion beschrieben werden. Als Beispiele seien dem Fachmann bekannte Funktionen wie Kreisfunktionen oder Ellipsenfunktionen, Parabelfunktionen oder Hyperbelfunktionen genannt. Auch ist beispielsweise möglich, Funktionen in der Form:

$$\vec{p} = \left(r_0 - f(s)\right) \cdot \begin{pmatrix} \cos(s) \\ \sin(s) \end{pmatrix} + \begin{pmatrix} x_0 \\ y_0 \end{pmatrix}$$

darzustellen, wodurch man, abhängig von der Gestalt der Funktion f(s) sich bei der Ausführung von Schneckenelementen zwischen einem Gehäuse mit einem Radius ro und dem rotierenden Schneckenelement ein Spalt von frei wählbarer Gestalt ergibt. Die Funktion f(s) kann beispielsweise eine lineare Funktion oder quadratische Funktion von s, eine Hyperbelfunktion oder eine Exponentialfunktion sein.

Weiterhin sind Funktionen, deren Werte durch Kontrollpunkte bestimmt werden, wie beispielsweise B-Spline-Funktionen, Bezier-Funktionen, rationale Bezier-Funktionen sowie nicht-uniforme rationale B-Splines (NURBS) genannt. Bezier-Funktionen, rationale Bezier-Funktionen und NURBS sind bevorzugt, weil sie häufig in der Konstruktion mit CAD-Systemen (CAD = Computer Aided Design) eingesetzt werden und dienen dort vor allem dazu, beliebige Formen in geometrisch anschaulicher Form durch Verschieben von Kontrollpunkten zu definieren. Besonders bevorzugt sind quadratische und kubische (d.h. mit n = 2 und n = 3) Bezier-Funktionen und kubische rationale Bezier-Funktionen.

Als Beispiel sollen hier Bezier-Funktionen angeführt werden. Bezier-Funktionen haben bekanntlich die Form

$$\vec{C}(t) = \sum_{i=0}^{n} B_{i,n}(t)\, \vec{P_i}$$

wobei $\vec{P_i}$ die Koordinaten der Kontrollpunkte und $B_{i,n}(t) = \binom{n}{i} t^i (1-t)^{n-i}$ ein Bernstein-Polynom ist.

Rationale Bezier-Funktionen vom Grad n, die beispielsweise in M. S. Floater: "Derivatives of Rational Bezier Curves", Comp. Aid. Geom. Design 9, 1992, 161-174 beschrieben werden, haben bekanntlich die Form

$$\vec{P}(t) = \frac{\sum_{i=0}^{n} B_{i,n}(t) w_i \vec{P_i}}{\sum_{i=0}^{n} B_{i,n}(t) \vec{P_i}}$$

wobei $\vec{P_i}$ die Koordinaten der Kontrollpunkte der Funktion und $w_i$ ihre Gewichtung darstellt.

Ebenso kann die Kurve $\vec{p}$ abschnittsweise durch verschiedene mathematische Funktionen beschrieben werden, wobei die abschnittsweisen Funktionen bevorzugt den im vorherigen Absatz genannten Funktionen entsprechen. Ein Sonderfall der abschnittsweisen Beschreibung durch mathematische Funktionen stellt die Beschreibung durch Kreisbögen dar. Das heißt, es ist möglich, einen Teil oder die gesamte Kurve $\vec{p}$ - und damit einen Teil oder das erzeugende Querschnittsprofil des einen Schneckenelements - durch Kreisbögen zu beschreiben. Aus der obigen Beziehung (1), nämlich $\vec{q} = \vec{p} + a \cdot \vec{n}(\vec{p}) + \vec{a}$, ergibt sich, dass in diesem Fall auch die Kurve $\vec{q}$ und damit das erzeugte Querschnittsprofil des anderen Schneckenelements aus Kreisbögen zusammengesetzt ist.

Die Kurve $\vec{p}$ muss mindestens abschnittsweise stetig differenzierbar sein. An den Abschnittsgrenzen einer abschnittsweise definierten Kurve $\vec{p}$ müssen die einzelnen Abschnitte somit nicht stetig differenzierbar ineinander übergehen. Stoßen zwei Kurvenabschnitte in einem Knick-Punkt aufeinander, so ist für den Knick-Punkt bzw. die Knick-Stelle kein Tangenten- und kein Normalen-Vektor definiert. Dementsprechend ergibt sich für die Knick-Stelle des Profils des einen Schneckenelements der korrespondierende Abschnitt der Kurve $\vec{q}$ des anderen Schneckenelements nicht unmittelbar aus der obigen Beziehung (1). Zu jedem Knick im Querschnittsprofil des einen Schneckenelements korrespondiert ein Kreisbogen im Profil des anderen Schneckenelements. Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens ist durch die Position seines Mittelpunkts und durch die Position seiner beiden Endpunkte gegeben. Ein zu einem Knick im Querschnittsprofil des einen Schneckenelements korrespondierender Kreisbogen im Querschnittsprofil des anderen Schneckenelements hat stets einen Radius, dessen Größe dem Achsabstand a entspricht. Ferner hat ein zu einem Knick korrespondierender Kreisbogen stets einen Winkel, der demjenigen Winkel entspricht, in dem die Tangenten an die Kurvenabschnitte in dem Knickpunkt aufeinandertreffen. Umgekehrt gilt entsprechend, dass ein korrespondierender Profilabschnitt der Kurve $\vec{q}$ ein "Knick" ist, wenn ein Profilabschnitt der Kurve $\vec{p}$ ein Kreisbogen mit dem Radius a ist.

Insofern ist es vorteilhaft, einen Knick durch einen Kreisbogen zu beschreiben, dessen Radius gleich 0 ist. An einem Knick erfolgt ein Übergang eines ersten Kurvenabschnitts durch Drehung um den Winkel des Kreisbogens mit Radius Null in einen zweiten Kurvenabschnitt. Eine Tangente an den ersten Kurvenabschnitt im Mittelpunkt des Kreisbogens mit dem Radius Null schneidet eine Tangente an den zweiten Kurvenabschnitt ebenfalls im Mittelpunkt des Kreisbogens in einem Winkel, der dem Winkel des Kreisbogens entspricht. Unter Berücksichtigung des Kreisbogens gehen alle benachbarten Kurvenabschnitte (erster Kurvenabschnitt → Kreisbogen mit Radius Null → zweiter Kurvenabschnitt) tangential ineinander über. Zweckmäßigerweise wird ein Kreisbogen mit einem Radius Null wie ein Kreisbogen behandelt, dessen Radius gleich eps ist, wobei eps eine sehr kleine positive reelle Zahl ist, die gegen 0 strebt ($eps \ll 1$, $eps \to 0$). Auf dem korrespondierenden Querschnittsprofil entsteht ein Kreisbogen mit demselben Winkel und einem Radius = Achsabstand. Dieser Sachverhalt wird in der WO2011/069896 A1 verdeutlicht (WO2011/069896 A1, Seite 8, Zeilen 5 - 11).

In bevorzugten Ausführungsformen der Erfindung lassen sich die Profile der Schneckenelemente daher auch ausschließlich durch eine Anordnung von Kreisbögen beschreiben. Das Schneckenprofil erzeugender und erzeugter erfindungsgemäßer Schneckenelemente setzt sich in seiner Gesamtheit aus n Kreisbögen zusammen, wobei n größer oder gleich vier ist. Jeder der n Kreisbögen besitzt einen Anfangs- und einen Endpunkt. Einige der Kreisbögen können an ihren Anfangs- und Endpunkten tangential ineinander übergehen, so dass sie teilweise eine stetig differenzierbare Profilkurve bilden. An der Stelle des Knicks bzw. der abrupten Steigungsänderung oder der geometrischen Unstetigkeit in der Steigung der Profilkurve gehen die jeweiligen Kreisbögen jedoch nicht tangential ineinander über sondern treffen einander in einem Winkel, vorzugsweise in einem Winkel zwischen 90° und 180°, weiter bevorzugt zwischen 120° und 180°, und noch weiter bevorzugt zwischen 140° und 180°.

Die Position eines jeden Kreisbogens j (j = 1 bis n) ist durch die Angabe von zwei verschiedenen Punkten eindeutig festlegbar. Zweckmäßigerweise wird die Position eines Kreisbogens durch Angabe des Mittelpunktes und/oder des Anfangs- oder Endpunktes festgelegt. Die Größe eines einzelnen Kreisbogens j ist durch den Radius $r_j$ und den Winkel $\alpha_j$ um den Mittelpunkt zwischen Anfangs- und Endpunkt festgelegt, wobei der Radius $r_j$ größer als 0 und kleiner als der Achsabstand a zwischen den Wellen ist und der Winkel $\alpha_j$ im Bogenmaß größer oder gleich 0 und kleiner oder gleich $2\pi$ ist, wobei $\pi$ die Kreiszahl ist.

In einer bevorzugten Ausführungsform der Erfindung sind die Schneckenelemente dadurch gekennzeichnet, dass

- das erzeugende Schneckenprofil und das erzeugte Schneckenprofil in einer Ebene liegen,

- die Drehachse des erzeugenden Schneckenprofils und die Drehachse des erzeugten Schneckenprofils in einem Abstand a (Achsabstand) jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,

- die Anzahl der Kreisbögen des gesamten erzeugenden Schneckenprofils n größer oder gleich vier ($n \geq 4$) ist,

- der Außenradius ra des erzeugenden Schneckenprofils größer als Null ($ra > 0$) und kleiner als der Achsabstand a ($ra < a$) ist,

- der Kernradius ri des erzeugenden Schneckenprofils größer als Null ($ri > 0$) und kleiner oder gleich Außenradius ra ($ri \leq ra$) ist,

- die Kreisbögen ein geschlossenes Schneckenprofil bilden, d.h. die Summe der Winkel $\alpha_j$ aller Kreisbögen j gleich $2\pi$ ist, wobei $\pi$ die Kreiszahl ($\pi \approx 3,14159$) ist,

- die Kreisbögen ein konvexes Schneckenprofil bilden,

- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,

- mindestens einer der Kreisbögen des erzeugenden Schneckenprofils den Außenradius ra des erzeugenden Schneckenprofils in einem Punkt $P_A$ berührt,

- mindestens einer der Kreisbögen des erzeugenden Schneckenprofils den Kernradius ri des erzeugenden Schneckenprofils in einem Punkt $P_I$ berührt,

- die Anzahl der Kreisbögen n' des erzeugten Schneckenprofils gleich der Anzahl der Kreisbögen n des erzeugenden Schneckenprofils ist,

- der Außenradius ra' des erzeugten Schneckenprofils gleich der Differenz aus Achsabstand und Kernradius des erzeugenden Schneckenprofils ist ($ra' = a - ri$),

- der Kernradius ri' des erzeugten Schneckenprofils gleich der Differenz aus Achsabstand und Außenradius des erzeugenden Schneckenprofils ist ($ri' = a - ra$),

- der Winkel $\alpha_j'$ des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,

- die Summe von Radius $r_j'$ des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,

- der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,

- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

In einer bevorzugten Ausführungsform der Erfindung sind die Profile erfindungsgemäßer Schneckenelemente dadurch charakterisiert, dass sie mit Winkellineal und Zirkel konstruiert werden können. Ein tangentialer Übergang zwischen dem j-ten und dem (j+l)-ten Kreisbogen des erzeugenden Schneckenprofils kann konstruiert werden, indem um den Endpunkt des j-ten Kreisbogens ein Kreis mit dem Radius $r_{j+1}$ geschlagen wird und der näher zum Drehpunkt des erzeugenden Schneckenprofils gelegene Schnittpunkt dieses Kreises mit der Geraden, die durch den Mittelpunkt und den Endpunkt des j-ten Kreisbogens definiert ist, der Mittelpunkt des (j+l)-ten Kreisbogens ist. Praktischerweise wird man anstelle von Winkellineal und Zirkel ein Computerprogramm zur Konstruktion der Schneckenprofile verwenden.

Die erfindungsgemäßen Schneckenelemente können symmetrisch oder unsymmetrisch sein; bevorzugt sind erfindungsgemäße Schneckenelemente symmetrisch. Symmetrische Schneckenelemente können achsensymmetrisch oder punktsymmetrisch sein; bevorzugt sind erfindungsgemäße Schneckenelemente achsensymmetrisch. Vorzugsweise haben die Schneckenelemente jeweils zwei Stellen der Unstetigkeit im Profilkurvenverlauf innerhalb eines Außenradius der Profilkurve, bspw. in einem Winkel von 180° oder $\pi$ im Bogenmaß um die Profilkurve voneinander versetzt. Vorzugsweise liegt jede dieser Stellen auf einer Auslaufseite eines Kamms der Profilkurve.

In einer bevorzugten Ausführungsform der Erfindung beträgt die Gangzahl Z solcher erfindungsgemäßer achsensymmetrischer Schneckenelemente im Bereich von 2 bis 8; besonders bevorzugt 2 bis 4. Die Profilkurve des Querschnitts erfindungsgemäßer symmetrischer Schneckenelemente lassen sich damit in Profil-Abschnitte unterteilen, die durch Punkt- oder Achsenspiegelung an den Symmetriezentren bzw. -achsen des Profils ineinander überführen. Die Zahl der Kreisbögen n, die einen der Profil-Abschnitte bilden, liegt bevorzugt im Bereich von 2 bis 8, besonders bevorzugt im Bereich von 3 bis 6.

Vorzugsweise lässt sich die Profilkurve des Querschnitts erfindungsgemäßer achsensymmetrischer Schneckenelemente in 2·Z Profil-Abschnitte unterteilen, die durch Achsenspiegelung an den Symmetrieachsen des Profils ineinander überführt werden können. Aufgrund seiner Symmetrie lässt sich das Profil eines achsensymmetrischen Schneckenelements mit einer Gangzahl Z also durch einen Profil-Abschnitt in einem Ausschnitt von 360°/(2·Z), der zwischen zwei Symmetrieachsen des Profils liegt, vollständig definieren. Das restliche Profil ergibt sich durch Spiegelung des Profil-Abschnitts an den Z Symmetrieachsen, die sich im Drehpunkt schneiden und den Winkel von 360° um den Drehpunkt in 2·Z Winkel der Größe 360°/(2·Z) unterteilen. Bei achsensymmetrischen Schneckenelementen sind ferner die korrespondierenden Schneckenprofile auf benachbarten Wellen (erzeugendes und erzeugtes Profil) gleich, bzw. lassen sich durch Rotation zur Deckung bringen. Analoges gilt für punktsymmetrische Schneckenprofile, bei dem sich die symmetrischen Teile jeweils durch Punktspiegelung am Symmetriezentrum ineinander überführen lassen.

In einer bevorzugten Ausführungsform der Erfindung ist der Profil-Abschnitt eines erfindungsgemäßen achsensymmetrischen Schneckenelements dadurch gekennzeichnet, dass er sich zwischen einem Punkt $P_A$, der auf dem Außenradius des Profils liegt, und einem Punkt $P_I$, der auf dem Kernradius des Profils liegt, aus Kreisbögen zusammensetzt. Die Kreisbögen gehen ineinander über und bilden über den größten Teil des Profil-Abschnitts eine stetig differenzierbare Kurve aber der Profil-Abschnitt umfasst mindestens eine Stelle, an der die Kreisbögen nicht tangential ineinander übergehen sondern einen Knick bilden bzw. sich in einem Winkel zwischen 90° und 180° treffen. In einer besonders bevorzugten Ausführungsform setzt sich ein Profil-Abschnitt eines erfindungsgemäßen Schneckenelements zwischen den Punkten $P_A$ und $P_I$ aus genau drei Kreisbögen zusammen. Mit drei Kreisbögen kann das Profil im Bereich des Punktes $P_A$, der die Zylinderwand abreinigt, durch Wahl eines kleinen Radius schlanker gestalten, wodurch die Energiedissipation weiter reduziert wird.

In einer anderen Ausführungsform der Erfindung kann ein punktsymmetrisches Schneckenprofil mit Gangzahl Z in Z symmetrische Teile aufgeteilt werden, wobei die symmetrischen Teile durch Punktspiegelung am Symmetriezentrum bzw. am Drehpunkt des Profils ineinander überführt werden können. Bei punktsymmetrischen Schneckenelementen sind die korrespondierenden Schneckenprofile auf benachbarten Wellen (erzeugendes und erzeugtes Profil) gleich, bzw. lassen sich durch Rotation zur Deckung bringen.

In einer bevorzugten Ausführungsform der Erfindung ist der Profil-Abschnitt eines erfindungsgemäßen Schneckenelements dadurch gekennzeichnet, dass er sich aus mehreren Kreisbögen zusammensetzt, die tangential ineinander übergehen und eine stetig differenzierbare Kurve zwischen zwei Stellen bilden, an denen der jeweilige Kreisbogen nicht tangential in den benachbarten Profil-Abschnitt übergeht sondern ihn in einem Winkel trifft, vorzugsweise in einem Winkel zwischen 90° und 180°, weiter bevorzugt in einem Winkel zwischen etwa 120° und 180°, und noch weiter bevorzugt in einem Winkel zwischen etwa 140° und 180°. Mit anderen Worten, die Endpunkten jedes Profil-Abschnitts in dieser Ausführungsform bilden die Knick-Stellen in der Profilkurve.

Die erfindungsgemäßen Schneckenelemente können als Förderelemente oder Knetelemente oder Mischelemente ausgebildet sein.
Ein Förderelement zeichnet sich bekanntlich dadurch aus (siehe zum Beispiel [1], Seiten 234 - 237), dass das Schneckenprofil in Achsrichtung kontinuierlich schraubenförmig verdreht und fortgesetzt wird. Dabei kann das Förderelement rechts- oder linksgängig sein. Die Steigung t des Förderelements kann z.B. Werte von dem 0,1 -fachen bis 10-fachen des Außendurchmessers annehmen, wobei unter der Steigung die axiale Länge verstanden wird, die für eine vollständige Drehung des Schneckenprofils erforderlich ist. Bevorzugt liegt die Steigung t im Bereich des 0,3- fachen bis 3-fachen des Außendurchmessers. Die axiale Länge eines Förderelements wird aus praktischen Gründen bevorzugt in ganzzahligen Vielfachen von t/Z ausgeführt.

Ein Knetelement zeichnet sich bekanntlich dadurch aus (siehe zum Beispiel [1], Seiten 237 - 240), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,02-fachen bis 2-fachen des Außendurchmessers. Der axiale Abstand zwischen zwei benachbarten Knetscheiben liegt bevorzugt im Bereich des 0,001 -fachen bis 0,1 -fachen des Außendurchmessers.

Mischelemente werden bekanntlich dadurch gebildet (siehe zum Beispiel [1], Seiten 242-244), dass Förderelemente mit Durchbrüchen in den Schneckenkämmen ausgeführt werden. Die Mischelemente können rechts- oder linksgängig sein. Ihre Steigung t liegt bevorzugt im Bereich des 0,1 -fachen bis 10-fachen des Außendurchmessers. Die axiale Länge eines Mischelements wird analog zu den Förderelementen bevorzugt in ganzzahligen Vielfachen von t/Z ausgeführt. Die Durchbrüche haben bevorzugt die Form einer u- oder v-förmigen Nut. Wird das Mischelement ausgehend von einem förderaktiven Element gebildet, so werden die Nuten bevorzugt gegenfördernd oder achsparallel angeordnet.

Gegenstand der vorliegenden Erfindung ist weiterhin ein Verfahren zur Erzeugung der erfindungsgemäßen Schneckenelemente, die sich bei gleichsinniger Rotation mit gleicher Drehzahl um zwei, in einem Abstand a parallel zueinander angeordnete Drehachsen stets in mindestens einem Punkt berühren.

In einer bevorzugten Ausführungsform des Verfahrens wird in einer Ebene E senkrecht zu den Drehachsen das (erzeugende) Querschnittsprofil des einen Schneckenelements durch eine stetige, abschnittsweise stetig differenzierbare, geschlossene, konvexe Kurve $\vec{p}$ und das (erzeugte) Querschnittsprofil des anderen Schneckenelements aus der Kurve $\vec{q}$ gemäß der folgenden Beziehung (1) gebildet: $\vec{q} = \vec{p} + a \cdot \vec{n}(\vec{p}) + \vec{a}$ (1), wobei

- die Kurve $\vec{p}$ in jedem Punkt einen Krümmungsradius $\rho$ aufweist, der kleiner oder gleich dem Achsabstand a der Schneckenelemente ist,
- für jeden Punkt der Kurve $\vec{p}$ innerhalb eines stetig differenzierbaren Abschnitts ein normierter Normalenvektor $\vec{n}(\vec{p})$ mit der Länge 1 existiert, der in dem jeweiligen Punkt senkrecht auf der Tangente zur Kurve $\vec{p}$ steht und in Richtung des Mittelpunktes des zum jeweiligen Punkt der Kurve $\vec{p}$ gehörigen Krümmungskreises zeigt,
- $\vec{a}$ ein Vektor ist, der in Richtung vom Schnittpunkt der Drehachse des erzeugenden Profils mit der Ebene E zum Schnittpunkt der Drehachse des erzeugten Profils mit der Ebene E führt und die Länge a besitzt.

Die Erzeugung der jeweiligen Profile nach der obigen Formel kann anhand eines Punktes an einer Kurve $\vec{p}$ vorgestellt werden. Die Profilkurven $\vec{p}$, $\vec{q}$ werden in einer Ebene senkrecht zu den Drehachsen der Schneckenelemente erzeugt. Die Drehachsen sind in einem Abstand a voneinander. Der Vektor $\vec{a}$ hat die Länge a und weist in Richtung von einer Drehachse zur anderen. Aus jedem Punkt der Profilkurve $\vec{p}$ des einen (erzeugenden) Profils lässt sich ein Punkt auf der korrespondierenden Kurve $\vec{q}$ des anderen (erzeugten) Profils erzeugen. Der Punkt auf der korrespondierenden Kurve $\vec{q}$ ergibt sich, indem man im Punkt der Kurve $\vec{p}$ eine Tangente $\vec{t}(\vec{p})$ an die Kurve legt, zu dieser Tangente den normierten Normalen-Vektoren $\vec{n}(\vec{p})$ bildet und ihn um den Faktor a verlängert {also, $a \cdot \vec{n}(\vec{p})$} und schließlich zu diesem Vektor $a \cdot \vec{n}(\vec{p})$ den Vektor $\vec{a}$ addiert.

Wie oben schon erläutert, zeichnen sich Schneckenelemente in einer bevorzugten Ausführungsformen der Erfindung durch ein Profil aus, das aus Kreisbögen zu einer Kurve zusammengesetzt wird, die mindestens eine Knick-Stelle bzw. eine Stelle der Unstetigkeit der Steigung in ihrem Verlauf aufweist, wobei diese mindestens eine Stelle innerhalb eines Außenradius der Profilkurve liegt. Vorzugsweise weist das erfindungsgemäße Verfahren zur Erzeugung von Schneckenelementen für mehrwellige Schneckenmaschinen mit paarweise gleichsinnigen und paarweise exakt abschabenden Schneckenwellen in einem Achsabstand a mit zwei oder mehr Schneckengängen deshalb Schneckenprofile auf, die im gesamten Querschnitt aus n Kreisbögen gebildet werden, wobei n eine ganze Zahl größer oder gleich 4 ist.

Das erfindungsgemäße Verfahren zur Erzeugung von erfindungsgemäßen Schneckenprofilen ist vorzugsweise dadurch gekennzeichnet, dass

- ein Außenradius ra des erzeugenden Schneckenprofils größer als 0 (ra > 0) und kleiner als der Achsabstand a (ra < a) gewählt wird,

- ein Kernradius ri des erzeugenden Schneckenprofils größer als 0 (ri > 0) und kleiner oder gleich Außenradius ra (ri ≤ ra) gewählt wird,

- die Kreisbögen nacheinander durch Festlegung ihrer Position und Größe so angeordnet werden, dass die Kreisbögen ein geschlossenes, konvexes Schneckenprofil bilden, wobei jeder der Kreisbögen des erzeugenden Schneckenprofils innerhalb oder auf den Grenzen eines Kreisrings mit dem Außenradius ra und dem Kernradius ri liegt, deren Mittelpunkte auf dem Drehpunkt des erzeugenden Schneckenprofils liegen, mindestens einer der Kreisbögen des erzeugenden Schneckenprofils den Außenradius ra des erzeugenden Schneckenprofils in einem Punkt $P_A$ berührt und mindestens einer der Kreisbögen des erzeugenden Schneckenprofils den Kernradius ri des erzeugenden Schneckenprofils in einem Punkt $P_1$ berührt,

- sich die n' Kreisbogen des erzeugten Schneckenprofils aus den n Kreisbogen des erzeugenden Schneckenprofils dadurch ergeben, dass

  ◦ die Anzahl der Kreisbogen n' des erzeugten Schneckenprofils gleich der Anzahl der Kreisbogen n des erzeugenden Schneckenprofils ist,

  ◦ der Außenradius ra' des erzeugten Schneckenprofils gleich der Differenz aus Achsabstand a und Kernradius ri des erzeugenden Schneckenprofils ist (ra' = a - ri),

  ◦ der Kernradius ri' des erzeugten Schneckenprofils gleich der Differenz aus Achsabstand a und Außenradius ra des erzeugenden Schneckenprofils ist (ri' = a - ra),

  ◦ der Winkel $\alpha_j$' des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbogen n beziehungsweise n' durchlaufen,

  ◦ die Summe von Radius $r_j$' des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbogen n beziehungsweise n' durchlaufen,

  ◦ der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt C' des erzeugten Schneckenprofils besitzt, der gleich dem Abstand des Mittelpunkts des j-ten Kreisbogens des erzeugenden Schneckenprofils von dem Drehpunkt C des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbogen n beziehungsweise n' durchlaufen,

  ◦ ein Anfangspunkt des j'-ten Kreisbogens des erzeugten Schneckenprofils in einer Richtung bezogen auf den Mittelpunkt des j'-ten Kreisbogens des erzeugten Schneckenprofils hegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

Das erfindungsgemäße Verfahren in der bevorzugten Variante, in dem das Schneckenprofil aus Kreisbögen zusammengefasst ist, lässt sich überraschenderweise allein mit Winkellineal und Zirkel auf Papier ausführen. Damit ist es prinzipiell sogar möglich, das Querschnitts-profil eines Schneckenelements nur mit der Hand zu erzeugen und das Querschnittsprofil des korrespondierenden Schneckenelements aus dem zeichnerisch vorgegebenen Profil zeichnerisch abzuleiten.

Es empfiehlt sich jedoch, das Verfahren zur Erzeugung von Schneckenprofilen auf einem Computer durchzuführen. Die Durchführung des erfindungsgemäßen Verfahrens auf einem Computersystem ist vorteilhaft, da die Koordinaten und Abmessungen der Profile in einer Form vorliegen, die von einem Computer weiter verarbeitet werden können. Ferner liegen die Abmessungen der Schneckenelemente auch dann in einer Form vor, in der sie einer CAD-Fräsmaschine zur Erzeugung der Schneckenelemente zugeführt werden können.

Gegenstand der vorliegenden Erfindung ist daher auch ein Computersystem zur Ausführung des erfindungsgemäßen Verfahrens zur Erzeugung von erfindungsgemäßen Schneckenprofilen auf einem Computer. Bevorzugt weist das Computersystem eine grafische Benutzeroberfläche (GUI) auf, die es einem Benutzer auf einfache Weise erlaubt, die frei wählbaren Größen zur Erzeugung von Profilen über Eingabegeräte, wie z.B. Maus und/oder Tastatur einzugeben. Besonders bevorzugt weist das Computersystem eine Möglichkeit auf, Konturen von Profilen mit Hilfe von Kontrollpunkten und ggf. Wichtungen bei Funktionen, deren Werte durch Kontrollpunkte definiert werden, Funktionen, deren Werte durch Kontrollpunkte bestimmt werden, wie beispielsweise B-Spline-Funktionen, Bezier-Funktionen, rationale Bezier-Funktionen sowie nicht-uniforme rationale B-Splines (NURBS) anzugeben, wobei dies in Form von Zahlen (Koordinaten), graphisch oder mit einer Kombination aus grafischer und zahlenmäßiger Eingabe erfolgen kann. Weiterhin weist das Computersystem bevorzugt eine grafische Ausgabe auf, mittels derer die berechneten Profile auf einem grafischen Ausgabegerät wie z.B. Bildschirm und/oder Drucker visualisiert werden können.

Bevorzugt weist das Computersystem die Möglichkeit auf, berechnete Profile zu exportieren, d.h. in Form von speicherbaren Datensätzen, welche die geometrischen Maße der berechneten Schneckenelemente umfassen, für weitere Verwendungszwecke entweder auf einem Datenträger zu speichern oder an ein angeschlossenes Gerät zu übertragen. Das Computersystem ist vorzugsweise so gestaltet, dass es sowohl Querschnittsprofile als auch aus den Querschnittsprofilen generierte Schneckenelemente berechnen und die berechneten Geometrien in einem Format ausgeben kann, das von einer Maschine zur Herstellung solcher Körper z.B. einer Werkzeugmaschine, beispielsweise einer Fräsmaschine verwendet werden kann, um reale Schneckenelemente herzustellen. Solche Formate sind dem Fachmann bekannt.

Gegenstand der vorliegenden Erfindung ist ferner ein Computerprogrammprodukt, mit Programmcodemitteln zum Ausfuhren des erfindungsgemäßen Verfahrens zur Erzeugung von erfindungsgemäßen Schneckenprofilen auf einem Computer.

In einer bevorzugten Ausführungsform der Erfindung steht einem Benutzer des Computerprogrammprodukts eine bevorzugt grafische Benutzeroberfläche zur Verfügung, mit deren Hilfe er die zu wählenden Parameter (Zahl der Kreisbögen des erzeugenden und erzeugten Schneckenprofils, Radien, Winkel) eingeben kann. Bevorzugt erhält er dabei Unterstützung von dem Computersystem, das den Benutzer darauf hinweist, wenn sich durch Wahl der Parameterwerte Schneckenprofile ergeben, die nicht paarweise exakt abschabend sind. Bevorzugt wird er bei der Eingabe der Parameterwerte in der Weise unterstützt, dass erlaubte Parameterwertebereiche angezeigt werden. Unter erlaubten Parameterwerten werden solche Kombinationen von Parameterwerten verstanden, die zu paarweise exakt abschabenden Schneckenprofilen fuhren.

In einer bevorzugten Ausführungsform der Erfindung werden nicht nur die Profile sondern ganze Schneckenelemente virtuell am Computer konstruiert. Das Ergebnis der Konstruktion wird bevorzugt in Form von Konstruktionszeichnungen auf einem Bildschirm oder an einem Drucker ausgegeben. Ebenso ist es denkbar, das Ergebnis als elektronische Datei auszugeben, die in einer bevorzugten Ausführungsform an eine CAD-Fräsmaschine zur Erzeugung der entsprechenden Schneckenelemente weitergegeben werden kann.

Nachdem die dreidimensionalen Profile auf die beschriebene Weise erzeugt worden sind, können die Schneckenelemente z.B. mit einer Fräsmaschine, einer Drehmaschine oder einer Wirbelmaschine erzeugt werden. Bevorzugte Materialien zur Erzeugung solcher Körper sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, sowie ingenieurkeramische Werkstoffe wie z.B. Zirkonoxid oder Siliziumcarbid, falls es sich bei den Körpern um Extruderschnecken handelt.

Das erfindungsgemäße Verfahren zur Erzeugung von erfindungsgemäßen Schneckenprofilen erlaubt es, das Profil einer Schnecke von Grund auf so zu gestalten, dass es für eine vorgegebene Aufgabe optimal geeignet ist. Die nach dem Stand der Technik bekannten Schneckenelemente sind zum größten Teil nicht auf eine konkrete Aufgabe hin optimal gestaltet. Vielmehr liefern die Hersteller Schneckenelemente (Förder-, Knet- und Mischelemente) aus einem festliegenden Baukastensystem unabhängig von einer konkreten Aufgabe. Durch das erfindungsgemäße Verfahren zur Erzeugung von erfindungsgemäßen Schneckenprofilen ist es möglich, das Profil von selbstreinigenden Schneckenelementen nahezu völlig frei zu gestalten und somit auf eine Anwendung hin durch kleinste Variation von Parametern für die jeweilige Anwendung zu optimieren. In diesem Zusammenhang sei darauf hingewiesen, dass die Zahl der Kreisbögen zur Erzeugung von Schneckenprofilen nicht limitiert ist. Dadurch ist es möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren. Dabei ist das mittels Kreisbögen approximierte Profil natürlich selbstreinigend.

Es sei auch darauf hingewiesen, dass sich aus einem (erzeugenden oder erzeugten) Schneckenprofil das entsprechende Längsschnittprofil berechnen lässt. Bevorzugt wird jeder Kreisbogen eines Schneckenprofils genutzt, um mittels einer expliziten Funktion einen zu diesem Kreisbogen gehörigen Teil des Längsschnitts zu berechnen. Zur Berechnung des Abstandes s eines Punktes eines Kreisbogens eines Schneckenprofils wird in einem ersten Schritt der Schnittpunkt (Sx, Sy) einer Geraden g, dadurch charakterisiert, dass die besagte Gerade in der Ebene des Schneckenprofils liegt, durch den Drehpunkt des Schneckenprofils führt und die Orientierung der Gerade durch den Winkel $\varphi$ gegeben ist, mit einem Kreisbogen kb, charakterisiert durch seinen Radius r und die Lage seines Mittelpunktes (Mx, My), bestimmt. In einem zweiten Schritt wird der Abstand des Schnittpunktes (Sx, Sy) vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher s = s($\varphi$, r, Mx, My). Der Winkel $\varphi$ lässt sich bei bekannter Steigung t eines Schneckenelements über $\varphi/2\pi$*t in eine axiale Position z_ax umrechnen, so das für den Abstand s = s(z_ax, r, Mx, My) = s($\varphi/2\pi$*t, r, Mx, My) gilt. Die Funktion s(z_ax, r, Mx, My) beschreibt den gesuchten Längsschnitt für einen Kreisbogen des Schneckenprofils.

Gegenstand der vorliegenden Erfindung ist ferner die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet-, Förder- oder Mischelementen vorliegen. Es ist ebenso möglich, Knet-, Förder-, und Mischelemente in einer Schneckenmaschine miteinander zu kombinieren. Die erfindungsgemäßen Schneckenelemente können auch mit anderen Schneckenelementen, die z.B. nach dem Stand der Technik bekannt sind, kombiniert werden.

Die erfindungsgemäßen Schneckenelemente bilden in mehrwelligen Schneckenmaschinen mit paarweise gleichsinnig und paarweise exakt abschabenden Schneckenwellen einen über ihren gesamten Umfang laufenden Kanal. Dabei weist der Kanal eine abwechselnd zu- und abnehmende Kanalbreite auf. Ein solcher Kanal wird hier als konvergentdivergenter Kanal bezeichnet. In einem solchen konvergent-divergenten Kanal tritt im Betrieb über seine gesamte Länge eine Kombination aus Scherströmung und Dehnströmung auf, die eine sehr gute Dispergierwirkung hat. Die Energieeinleitung ist im Vergleich zu herkömmlichen, nach dem Stand der Technik bekannten Schneckenelementen reduziert. Exzentrisch angeordnete Kreisscheiben bilden ebenfalls einen konvergent-divergenten Kanal. Die erfindungsgemäßen Schneckenelemente weisen jedoch einen geringeren Umfangsbereich auf, in dem ein sehr enger Spalt vorliegt, als exzentrisch angeordnete Kreisscheiben. Daher ist die Energieeinleitung bei der Verwendung von erfindungsgemäßen Schneckenelementen in Mehrwellenschneckenmaschinen gegenüber der Verwendung exzentrisch angeordneter Kreisscheiben reduziert. Vorzugsweise sind die Profile der Schneckenelemente paarweise relativ zum zentrisch in der Gehäusebohrung gelegenen Drehpunkt verschoben.

Die erfindungsgemäßen Schneckenelemente eignen sich zur Extrusion plastischer und viskoelastischer Massen, z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Unter einer plastischen Masse wird eine verformbare Masse verstanden. Beispiele für plastische Massen sind Polymerschmelzen, vor allem von Thermoplasten, sowie Elastomere, Mischungen von Polymerschmelzen oder Dispersionen von Polymerschmelzen mit Feststoffen, Flüssigkeiten oder Gasen.

Bevorzugt werden thermoplastische Polymere oder Gemische von Polymeren aus der folgenden Reihe eingesetzt: Polycarbonat, Polyamid, Polyester, insbesondere Polybutylenterephthalat und Polyethylenterephthalat, sowie Polyether, thermoplastisches Polyurethan, Polyacetal, Fluorpolymer, insbesondere Polyvinylidenfluorid, sowie Polyethersulfone, Polyolefin, insbesondere Polyethylen und Polypropylen, sowie Polyimid, Polyacrylat, insbesondere Poly(methyl)methacrylat, sowie Polyphenylenoxid, Polyphenylensulfid, Polyetherketon, Polyaryletherketon, Styrolpolymerisate, insbesondere Polystyrol und Styrolcopolymere, insbesondere Styrolacrylnitrilcopolymer und Acrylnitrilbutadienstyrolblockcopolymere sowie Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Unter viskoelastischen Massen werden solchen Materialien und Mischungen verstanden, die eine zeit-, temperatur- und frequenzabhängige Elastizität aufweisen. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut.

Beispiele für viskoelastische Materialien sind Styrol-Butadien-Kautschuk, Naturkautschuk, Butatdien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Die zu extrudierenden plastischen oder viskoelastischen Polymere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

Additive können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Weichmacher, Farbmittel, Pigmente, Verarbeitungshilfsmittel, Füllstoffe, Antioxidantien, Verstärkungsstoffe, UV-Absorber und Lichtstabilisatoren, Extenderöle, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für Füll- und Verstärkungsstoffe sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die erfindungsgemäßen Schneckenelemente eigen sich wie oben ausgeführt besonders zur Extrusion viskoelastischer Massen. Die Verfahrensschritte, die mit Hilfe dieser Elemente durchgeführt werden können, sind beispielsweise das Einmischen oder Dispergieren von Feststoffen oder Flüssigkeiten oder Gasen. Feststoffe können beispielsweise die oben genannten festen Addtive sein. Flüssigkeiten können beispielsweise die oben genannten Additive in flüssiger Form sein, aber auch beispielsweise Wasser. Gase können beispielsweise Stickstoff oder Kohlendioxid sein. Gegenstand der vorliegenden Erfindung ist daher weiterhin ein Verfahren zur Extrusion viskoelastischer Massen in einem Doppelschnecken- oder Mehrwellenextruder unter Verwendung von erfindungsgemäßen Schneckenelementen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

Fig. 1 Profilkurven erfindungsgemäßer Schneckenelemente in einer mehrwelligen Schneckenmaschine gemäß eines Ausführungsbeispiels der Erfindung;

Fig. 2 Profilkurven erfindungsgemäßer Schneckenelemente in einer mehrwelligen Schneckenmaschine gemäß eines weiteren Ausführungsbeispiels der Erfindung;

Fig. 3 Profilkurven erfindungsgemäßer Schneckenelemente in einer mehrwelligen Schneckenmaschine gemäß einer Abwandlung des Ausführungsbeispiels in Fig. 2.

Aus praktischen Gründen soll der weiteren Beschreibung ein kartesisches Koordinatensystem zu Grunde gelegt werden, dessen Ursprung durch den Drehpunkt C eines Schneckenelements gebildet wird. Die x-Achse des kartesischen Koordinatensystems verläuft durch den Punkt $P_A$; die y-Achse steht im Drehpunkt C senkrecht auf der x-Achse. In Figur 1 ist ein solches Koordinatensystem gezeigt.

Sinnvollerweise arbeitet man mit dimensionslosen Kennzahlen, um die Übertragbarkeit auf unterschiedliche Extruder-Baugrößen zu vereinfachen. Als Bezugsgröße für geometrische Größen wie zum Beispiel Längen oder Radien bietet sich der Achsabstand A an, da diese Größe an einem Extruder nicht verändert werden kann.

Für die Figuren gelten folgende Konventionen: Die Koordinaten x und y haben ihren Ursprung im Drehpunkt einer der Wellen. Alle Winkelangaben erfolgen im Bogenmaß. Alle übrigen Maßangaben sind auf den Achsabstand normiert und werden durch Großbuchstaben dargestellt: A = a/a; $R_j = r_j/a$; RA = ra/a; RJ = ri/a T = t/a usw. Mx und My sind die x- und y-Koordinaten des Kreismittelpunkts eines profilerzeugenden Kreisbogens, R ist der auf den Achsabstand a normierte Radius und $\alpha$ der Bogenwinkel des Kreisbogens. Weiterhin bedeuten RG = normierter Gehäuseradius, RV = normierter virtueller Gehäuseradius, RA = normierter Außenradius des exakt abschabenden Profils, RF = normierter Außenradius der zu fertigenden Schnecke, S = normiertes Spiel der Schnecken untereinander (Spalt), D = normiertes Spiel der Schnecke zum Gehäuse, VPR = normierter Betrag der Profilverschiebung, VPW Winkel der Profilverschiebung im Bogenmaß, VLR = normierter Betrag der Verschiebung der linken Welle, VLW = Winkel der Verschiebung der linken Welle, VRR = normierter Betrag der Verschiebung der rechten Welle, VRW = Winkel der Verschiebung der rechten Welle.

Figur 1 zeigt im Querschnitt zwei in einem Abstand A voneinander angeordnete exakt abschabende, zweigängige erfindungsgemäße Schneckenelemente 10, 10', welche jeweils ein erzeugendes und ein erzeugtes Profil 11, 11' aufweisen. Die mit C und C' gekennzeichneten Punkte geben die Drehpunkte der Profile 11, 11' bzw. die Drehachsen der Wellen W, W' an, auf denen die Schneckenelemente angeordnet sind. Der Drehpunkt C des erzeugenden Schneckenelements 10 befindet sich im Abstand A vom Drehpunkt C' des korrespondierenden (erzeugten) Schneckenelements 10'. Der Koordinatenursprung markiert in dieser und allen weiteren Figuren den Drehpunkt C der Welle W. Um den Drehpunkt C kann ein Kreis (Innenkreis) mit dem Kernradius RI und ein Kreis (Außenkreis) mit dem Außenradius RA des Schneckenelements 10 eingezeichnet werden. Innenkreis und Außenkreis bilden einen Kreisring. Mit dem Außenradius RA kann ein Kreis um das Profil herum gezeichnet. Die Gehäusebohrung 12 wird durch einen dazu konzentrischen Kreis mit einem gegenüber dem Außenradius RA um das Spiel D vergrößerten Radius RG repräsentiert (also, RG = RA + D).

Das Schneckenelement 10 hat eine Gangzahl Z = 2 und eine konvexe Profilkurve 11, die aus mehreren Kreisbögen gebildet wird. Die Profilkurve 11 lässt sich in 2·Z, also vier Profil-Abschnitte unterteilen, die durch Achsenspiegelung an den Symmetrieachsen des Profils ineinander überführt werden können. Somit lässt sich das Profil 11 des Schneckenelements 10 durch einen Profil-Abschnitt in einem Ausschnitt von 360°/(2·Z), also 90°, der zwischen zwei Symmetrieachsen des Profils liegt, vollständig definieren. Das in Figur 1 gezeigte, erzeugende Profil 11 ist achsensymmetrisch zur x- und y-Achse, sodass sich das gesamte Profil 11 durch Spiegelung des Viertels zwischen den Punkten $P_A$ und $P_I$ an der x- und y-Achse ergeben würde. Alle Punkte des Profil-Abschnitts zwischen den Punkten $P_A$ und $P_I$ sowie des sich daraus ergebenden Gesamtprofils 11 des Schneckenelements 10 liegen im Kreisring zwischen dem Kernradius RI und dem Außenradius RA. Das Profil 11 zeichnet sich dadurch aus, dass es innerhalb eines Profil-Abschnitts in einem Ausschnitt von 90° nur einen einzigen Punkt $P_A$ gibt, der einen Abstand vom Drehpunkt C hat, der dem Außenradius RA des Schneckenelements 10 entspricht. Anders ausgedrückt gibt es nur einen Punkt $P_A$ im Profil-Abschnitt, der auf einem Kreis um den Drehpunkt C mit dem Außenradius RA (Außenkreis) liegt. Durch fortlaufende Spiegelung des Profil-Abschnitts zwischen $P_A$ und $P_I$ an einer Geraden, die durch die Punkte C und $P_A$ verläuft (also, die x-Achse) und an einer Geraden, die durch die Punkte C und $P_I$ verläuft (also, die y-Achse), lässt sich das Gesamtprofil 11 des (erzeugenden) Schneckenelements 10 konstruieren. Das Profil 11' des korrespondierenden (erzeugten) Schneckenelements 10' ergibt sich dann durch Drehung des Profils 11 des Schneckenelements 10 um einen Winkel von 90°.

Zur Erzeugung des Profil-Abschnitts zwischen den Punkten $P_A$ und $P_I$ kennzeichnet der Punkt $P_A$ einen Anfangspunkt eines ersten Kreisbogens 1 mit einem Radius $R_1$ < RA und einem Mittelpunkt $M_1$, der auf der Verbindungsstrecke C-$P_A$ liegt. Der Punkt $P_A$ liegt auf dem Außenkreis. Punkt $P_I$ kennzeichnet einen Anfangspunkt eines Kreisbogens 3 mit einem Radius $R_3$ = A - $R_1$. Sein Mittelpunkt $M_3$ liegt auf der Strecke C-$P_I$. Zwischen dem Kreisbogen 1 und dem Kreisbogen 3 schließt sich ein Kreisbogen 2 mit Radius $R_2$ = A und einem Mittelpunkt $M_2$ derart an, dass der Kreisbogen 2 tangential in den Kreisbogen 3 übergeht aber einen Knick-Stelle K in einem Winkel θ mit dem Kreisbogen 1 bildet, so dass die Knick-Stelle K eine geometrische Unstetigkeit in der Steigung der Profilkurve 11 darstellt. Der Winkel θ liegt bevorzugt im Bereich zwischen 140° und 180°.

Mit Bezug nun auf Figur 2 sind im Querschnitt zwei in einem Abstand A voneinander angeordnete exakt abschabende, zweigängige erfindungsgemäße Schneckenelemente 10, 10' gezeigt, bei denen sich die Profil-Abschnitte nicht durch Achsenspiegelung zur Deckung bringen lassen sondern bei denen die Profil-Abschnitte punktsymmetrisch zu den Drehpunkten C, C' sind, sodass sich das gesamte Schneckenprofil 11, 11' durch Spiegelung der einen Hälfte an dem Drehpunkt C bzw. C' ergibt. Die Schneckenelemente 10, 10' verfügen somit über dasselbe punktsymmetrische Schneckenprofil 11, 11' in der Form eines erzeugenden und eines erzeugten Profils. Das rechte Schneckenelement 10' ist gegenüber dem linken Schneckenelement 10 um 90° gedreht. Jedes der gezeigten Schneckenprofile 11, 11' setzt sich aus zwei symmetrischen Profil-Abschnitten zusammen und an den Übergängen der Abschnitte treten Knicke K, K' auf, die durch einen Pfeil gekennzeichnet sind.

Zur Erzeugung des Profil-Abschnitts kann der Punkten $P_A$ einen Anfangspunkt eines ersten Kreisbogens 1 kennzeichnen mit einem Radius $R_1$ < RA und einem Mittelpunkt $M_1$, der auf der Verbindungsstrecke C-$P_A$ liegt. Der Punkt $P_A$ liegt auf dem Außenkreis. Punkt $P_I$ kennzeichnet einen Anfangspunkt eines Kreisbogens 2 mit einem Radius $R_2$ und einem Mittelpunkt $M_2$, der auf der Strecke C-$P_I$ liegt. Der Kreisbogen 2 schließt sich den Kreisbogen 1 derart an, dass sich die Kreisbögen 1, 2 einander in einem Winkel θ treffen und eine Knick-Stelle K bilden, die eine geometrische Unstetigkeit in der Steigung der Profilkurve 11 darstellt. Der Winkel θ liegt bevorzugt zwischen 140° und 180°. Der Punkt $P_I$ kennzeichnet ferner einen Anfangspunkt eines Kreisbogens 3 mit Radius $R_3$ = A - $R_1$ und einem Mittelpunkt $M_3$, der ebenfalls auf der Strecke C-$P_I$ liegt, sodass der Kreisbogen 2 tangential in den Kreisbogen 3 übergeht. Der Kreisbogen 3 geht dann tangential in einen weiteren Kreisbogen 4 mit einem Radius $R_4$ = A und einem Mittelpunkt $M_4$ über und die Hälfte der Profilkurve 11 wird durch einen letzten Kreisbogen 5 zum gegenüberliegenden Punkt $P_A$ auf dem Außenkreis ergänzt. Der Kreisbogen 5 hat einen Radius $R_5$ = A - $R_2$ und einen Mittelpunkt $M_5$, der auf der Strecke $P_A$-C liegt, und verläuft tangential aus dem Kreisbogen 4 heraus zum Punkt $P_A$.

Die obere Hälfte der Profilkurve 11, die zwischen den Punkten $P_A$-$P_A$ verläuft und aus der Kreisbögen-Serie 1-2-3-4-5 gebildet ist, entspricht der unteren Hälfte der Profilkurve 11, welche durch eine Punktspiegelung der oberen Hälfte am Drehpunkt C erzeugt werden kann. Gleichwohl kann man sich die Schneckenprofile 11, 11' in diesem Ausführungsbeispiel so vorstellen, dass die Profilkurven zwei stetig differenzierbar Hälften umfasst, die jeweils aus einer Serie tangential ineinander übergehender Kreisbögen 2-3-4-5-1 bestehen und sich an den jeweiligen Knick-Stellen K, K' treffen. Das heißt, die Knick-Stellen K, K' können auch als die Endpunkte der jeweiligen Profil-Abschnitte gesehen werden. Dies lässt sich von der gestrichelten Linie durch die Knick-Stellen K' und den Drehpunkt C' des erzeugten Schneckenprofils 11' in Figur 2 besser vorstellen. Als solche kann sich jeder Profil-Abschnitt aus mehreren Kreisbögen 1-5 zusammensetzen, die tangential ineinander übergehen und eine stetig differenzierbare Kurve zwischen zwei Knick-Stellen K, K' bilden. An den Knick-Stellen K, K' gehen die jeweiligen Kreisbögen nicht tangential in den benachbarten Profil-Abschnitt über sondern stehen im Winkel θ dazu.

Ein weitere Ausführungsform erfindungsgemäßer Schneckenelemente ist beispielhaft in Figur 3 dargestellt. Sie ist eine Abwandlung des Ausführungsbeispiels in der Figur 2 mit etwas anderen Maßen, hat aber prinzipiell den gleichen punktsymmetrischen Aufbau mit fünf Kreisbögen 1-5 und zwei Knick-Stellen K, K.

Schneckenelemente für eine Schneckenmaschine bzw. für einen Doppelschnecken- oder Mehrwellenextruder sind üblicherweise in ein Gehäuse eingebracht. Dabei sind die Schneckenelemente und das Gehäuse so ausgeführt,

dass durch die Rotation der Schneckenelemente nicht nur eine paarweise Abschabung benachbarter Schneckenelemente erfolgt, sondern auch eine Abreinigung der Gehäuseinnenwandungen durch die Rotation der Schneckenelemente gegeben ist. Bis hierher wurden nur exakt abschabende Schneckenprofile behandelt. Bei technisch ausgeführten Maschinen ist es aber erforderlich, von der exakt abschabenden Geometrie insofern abzuweichen, als exakt definierte Spalte S bzw. D bei der Abreinigung eingehalten werden, wobei im Rahmen der vorliegenden Erfindung die Begriffe, Abreinigung/abreinigen synonym zu Abschabung/abschaben verwendet werden. Dies ist notwendig, um metallisches "Fressen" zu verhindern, um Fertigungstoleranzen auszugleichen und um übermäßige Energiedissipation in den Spalten zu vermeiden.

Wie beispielsweise in der Veröffentlichung [1] auf den Seiten 27 bis 30 ausgeführt, weisen Anordnungen aus Schneckenelementen und Gehäuse in der Praxis stets sogenannte Spiele auf. Die Spiele können, wie dem Fachmann bekannt ist, zwischen Schnecke und Gehäuse und zwischen Schnecke und Schnecke unterschiedlich groß oder gleich sein. Das Spiel zwischen Schnecke und Gehäuse wird als "$\delta$" bezeichnet, das Spiel zwischen Schnecke und Schnecke als "s". Die Spiele können auch konstant oder, in den angegebenen Grenzen, variabel sein. Es ist auch möglich, innerhalb der Spiele ein Schneckenprofil zu verschieben. Damit weisen die in der Praxis eingesetzten Schneckenelemente aufgrund der vorliegenden Spiele streng genommen nicht die Eigenschaft auf, dass sie sich bei gleichsinniger Rotation mit gleicher Drehzahl um parallel angeordnete Achsen in mindestens einem Punkt berühren. Dennoch geht man zur Erzeugung von Schneckenelementen in der Praxis üblicherweise, wie in [1] ausgeführt, von den exakt abschabenden Konturen (Profilen) aus und führt dann Spiele ein. Erfindungsgemäß werden demnach zunächst Schneckenelemente vorzugsweise virtuell erzeugt, die sich bei gleichsinniger Rotation mit gleicher Drehzahl um parallel angeordnete Achsen stets in mindestens einem Punkt berühren. Ausgehend von diesen vorzugsweise virtuellen Geometrien werden Spiele vorgesehen, die verhindern, dass die in der Praxis eingesetzten Schneckenelemente "fressen", d.h. dass die Schneckenelemente sich gegenseitig unter Zerstörung ihrer Oberfläche abschaben.

Dem Fachmann sind Methoden bekannt, um ausgehend von einem vorgegebenen, exakt abschabenden Schneckenprofil, ein Schneckenprofil mit Spielen abzuleiten. Bekannte Methoden hierfür sind beispielsweise die in [1] auf den Seiten 28ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich gegenseitig abreinigen, das Schneckenelement in der Richtung senkrecht zu den Flächen des exakt abschabenden Profils um das halbe Spiel zwischen Schnecke und Schnecke verkleinert. Auch eine exzentrische Positionierung von Schneckenelementen in einem Gehäuse unter Beibehaltung der Gehäuse- und paarweisen Abschabung ist dem Fachmann der Extrudertechnik bekannt (siehe z.B. [1] Seiten 108, 246 und 249). Die Regeln zur Erzeugung von Schneckenprofilen mit definierten Spalten S sowie die Verwendung von Gehäusen, Spielen und/oder exzentrischer Positionierung sind auf erfindungsgemäße Schneckenelemente 10, 10’, die sich bei der gleichsinnigen Rotation um zwei parallel angeordnete Achsen in der Weise streifen, dass sie sich stets in mindestens einem Punkt berühren, in entsprechender Weise anwendbar.

In den Figuren 1 bis 3 wurden ausschließlich zweigängige Schneckenelemente 10, 10’ behandelt. Dieselben Prinzipien lassen sich jedoch auch auf Schneckenelemente mit drei und mehr Gängen anwenden. Die Vorgehensweise bei dreigängigen Schneckenelementen ist analog zur Vorgehensweise bei den zweigängigen Profilen. Der Außenradius des Profils wird gegenüber dem Gehäuseradius verkleinert und das Profil paarweise verschoben, wobei der Drehpunkt zentrisch zum Gehäuse beibehalten wird. Für die dreigängigen Profile lassen sich auch exzentrisch rotierende Profile konstruieren. Besonders interessant sind Schneckenprofile, bei denen sich die Schecken untereinander vollständig abreinigen und wo das Gehäuse mit nur einem von drei Kämmen abgereinigt wird. Die Erzeugung von Spalten bei der gegenseitigen Abreinigung der Profile und bei der Abreinigung des Gehäuses erfolgt in völliger Übereinstimmung mit der Vorgehensweise bei den zweigängigen Profilen. Die dreigängigen Profile können als kontinuierliches Fördergewinde oder als Knetscheiben erfindungsgemäß eingesetzt werden.

Achsensymmetrische viergängige Schneckenprofile können durch einen 45°- Abschnitt des Schneckenprofils vollständig definiert werden. Die Erzeugung von exzentrischen Profilen und die Erzeugung von Spalten bei der Abreinigung erfolgt auf ähnliche Art und Weise wie bei den zwei- und dreigängigen Profilen und wird hier nicht gezeigt. Die viergängigen Profile können ebenfalls als kontinuierliches Fördergewinde oder als Knetscheiben eingesetzt werden. Erfindungsgemäße Profile mit mehr als vier Gängen können auf analoge Weise hergestellt werden. Ebenso können auf analoge Weise die Spalte variiert und exzentrische Profile erzeugt werden.

## Patentansprüche

1. Schneckenelemente für mehrwellige Schneckenmaschinen mit paarweise gleichsinnig drehenden Schneckenwellen, wobei diese Schneckenelemente paarweise exakt abschabend sind und aus diesen Schneckenelementen zusammengesetzte Schneckenwellen zwei oder mehr Schneckengänge aufweisen, wobei die Schneckenprofile über den gesamten Querschnitt durch jeweilige Profilkurven darstellbar sind, **dadurch gekennzeichnet, dass** jede Profilkurve mindestens eine Knick-Stelle in ihrem Verlauf aufweist, die innerhalb eines Außenradius der Profilkurve liegt, wobei das Verhältnis eines Krümmungsradius des Schneckenprofils zum Außenradius des Profils an dem Punkt $P_A$, der das Gehäuse abreinigt, 0,2 bis 0,8 beträgt, und das Verhältnis vom Außenradius ra des Schneckenelements zum Achsabstand a für zweigängige Schneckenelemente zwischen 0,54 und 0,7, für dreigängige Schneckenelemente zwischen 0,53 und 0,57, sowie für viergängige Schneckenelemente zwischen 0,515 und 0,535 beträgt.

2. Schneckenelemente nach Anspruch 1, **dadurch gekennzeichnet, dass** jede Profilkurve eine stetige, geschlossene, konvexe Kurve ist, die abgesehen von der mindestens einen Knick-Stelle auch stetig differenzierbar ist.

3. Schneckenelemente nach Anspruch 2, **dadurch gekennzeichnet, dass** das Profil des einen Schneckenelements durch eine Kurve $\vec{p}$ und das Profil des anderen Schneckenelements aus der Kurve $\vec{q}$ gemäß der folgenden Beziehung (1) gebildet wird:

$$\vec{q} = \vec{p} + \mathrm{a} \cdot \vec{n}(\vec{p}) + \vec{a} \qquad (1),$$

wobei

- die Kurve $\vec{p}$ in jedem Punkt einen Krümmungsradius $\rho$ aufweist, der kleiner oder gleich einem Achsabstand a der Schneckenelementen ist,
für jeden Punkt der Kurve $\vec{p}$ innerhalb eines stetig differenzierbaren Abschnitts ein normierter Normalenvektor $\vec{n}(\vec{p})$ mit der Länge 1 existiert, der in dem jeweiligen Punkt senkrecht auf der Tangente zur Kurve $\vec{p}$ steht und in Richtung des Mittelpunktes des zum jeweiligen Punkt der Kurve $\vec{p}$ gehörigen Krümmungskreises zeigt,
$\vec{a}$ ein Vektor ist, der in Richtung vom Drehpunkt des erzeugenden Profils zum Drehpunkt des erzeugten Profils führt und die Länge a hat.

4. Schneckenelemente nach einem der Ansprüche 1 bis 3, **dadurch gekennzeichnet, dass** sich jedes Schneckenprofil bzw. jede Profilkurve aus mehreren Kreisbögen zusammensetzt, wobei die jeweiligen Kreisbögen an der mindestens einen Knick-Stelle in einem Winkel zwischen 90° und 180°, bevorzugt zwischen 140° und 180° zueinander stehen.

5. Schneckenelemente nach einem der Ansprüche 1 bis 4, **dadurch gekennzeichnet, dass** sich jedes Schneckenprofil bzw. jede Profilkurve in Profil-Abschnitte unterteilen lässt, die durch eine Punkt- oder Achsenspiegelung ineinander überführt werden können.

6. Schneckenelemente nach Anspruch 5, wobei sich jeder Profil-Abschnitt aus mehreren Kreisbögen zusammensetzt, **dadurch gekennzeichnet, dass** die Zahl der Kreisbögen, die einen der Profil-Abschnitte bilden, bevorzugt 2 bis 8, besonders bevorzugt 3 bis 6 beträgt.

7. Schneckenelemente nach Anspruch 5 oder Anspruch 6, **dadurch gekennzeichnet, dass** sich einer der Profil-Abschnitte zwischen einem Punkt ($P_A$, $P_A$'), der auf dem Außenradius des Profils liegt, und einem Punkt, der auf dem Kernradius des Profils liegt, erstreckt und die mindestens eine Knick-Stelle umfasst.

8. Schneckenelemente nach Anspruch 5 oder Anspruch 6, **dadurch gekennzeichnet, dass** jeder Profil-Abschnitt eine stetig differenzierbare Kurve zwischen zwei Knick-Stellen umfasst.

9. Schneckenelemente nach einem der Ansprüche 1 bis 8, **dadurch gekennzeichnet, dass** das Verhältnis eines Krümmungsradius des Schneckenprofils zum Außenradius des Profils 0,3 bis 0,7, bevorzugt 0,35 bis 0,65 beträgt, vorzugsweise an dem Punkt $P_A$, der das Gehäuse abreinigt.

10. Verfahren zur Erzeugung von Schneckenelementen nach einem der Ansprüche 1 bis 9, wobei zur Ausbildung der Schneckenprofile eine Profilkurve in einer Ebene senkrecht zur Drehachse erzeugt wird, welche Profilkurve mindestens eine Knick-Stelle bzw. eine Stelle der Unstetigkeit in der Steigung der Kurve in ihrem Verlauf aufweist, wobei diese Stelle innerhalb eines Außenradius der Profilkurve liegt.

11. Verfahren zur Erzeugung von Schneckenelementen nach Anspruch 10, **dadurch gekennzeichnet, dass** in einem

ersten Schritt zur Ausbildung der Schneckenprofile eine Profilkurve in einer Ebene senkrecht zur Drehachse erzeugt wird, welche Profilkurve mindestens eine Knick-Stelle bzw. eine Stelle der Unstetigkeit in der Steigung der Kurve in ihrem Verlauf aufweist, wobei diese Stelle innerhalb eines Außenradius der Profilkurve liegt, und in einem zweiten Schritt Spiele eingeführt werden.

**12.** Verwendung von Schneckenelementen nach einem der Ansprüche 1 bis 9 oder erzeugt nach Anspruch 10 oder 11 in einer Schneckenmaschine.

**13.** Verwendung nach Anspruch 12, **dadurch gekennzeichnet, dass** sich die Schneckenelemente paarweise an ihrem gesamten Umfang mit konstantem Spalt abreinigen, oder wobei sich die Schneckenelemente paarweise mit einem Spalt abreinigen, der nicht über den gesamten Umfang konstant ist.

**14.** Schneckenmaschine, insbesondere Extruder, mit paarweise gleichsinnig drehenden Schneckenwellen, **dadurch gekennzeichnet, dass** die Schneckenwellen Schneckenelemente nach einem der Ansprüche 1 bis 9 oder erzeugt nach Anspruch 10 oder 11 aufweisen.

**15.** Verfahren zur Extrusion plastischer Massen, **dadurch gekennzeichnet, dass** Schneckenelemente nach einem der Ansprüche 1 bis 9 oder erzeugt nach Anspruch 13 oder 14 oder eine Schneckenmaschine nach Anspruch 14 verwendet werden.

## Claims

**1.** Screw elements for multi-shaft screw machines with paired co-directionally rotating screw shafts, these screw elements being fully wiping in pairs and screw shafts that are made up of these screw elements having two or more screw flights, the screw profiles being able to be represented over the entire cross section by respective profile curves, **characterized in that** each profile curve has at least one kink location along it that lies within an outer radius of the profile curve, the ratio of a radius of curvature of the screw profile to the outer radius of the profile at the point $P_A$ which cleans the barrel being 0.2 to 0.8, and the ratio of the outer radius ra of the screw element to the centerline distance a for double-flighted screw elements being between 0.54 and 0.7, for triple-flighted screw elements between 0.53 and 0.57, and for quadruple-flighted screw elements between 0.515 and 0.535.

**2.** Screw elements according to Claim 1, **characterized in that** each profile curve is a continuous, closed, convex curve, which is also continuously differentiable apart from the at least one kink location.

**3.** Screw elements according to Claim 2, **characterized in that** the profile of the one screw element is formed by a curve $\vec{p}$ and the profile of the other screw element is formed from the curve $\vec{q}$ according to the following relationship (1):

$$\vec{q} = \vec{p} + \mathrm{a} \cdot \vec{n}(\vec{p}) + \vec{a} \qquad (1),$$

where

- the curve $\vec{p}$ has at each point a radius of curvature ρ that is less than or equal to a centerline distance a between the screw elements,
- for each point of the curve $\vec{p}$ within a continuously differentiable portion there exists a normalized normal vector $\vec{n}(\vec{p})$ with the length 1, which at the respective point is perpendicular to the tangent to the curve $\vec{p}$ and points in the direction of the center point of the curvature belonging to the respective point of the curve $\vec{p}$,
- $\vec{a}$ is a vector which leads in the direction from the point of rotation of the generating profile to the point of rotation of the generated profile and has the length a.

**4.** Screw elements according to one of Claims 1 to 3, **characterized in that** each screw profile or each profile curve is made up of a number of arcs of a circle, the respective arcs being at an angle of between 90° and 180°, preferably between 140° and 180°, to one another at the at least one kink location.

**5.** Screw elements according to one of Claims 1 to 4, **characterized in that** each screw profile or each profile curve allows itself to be subdivided into profile portions, which can be transferred into one another by point or axis mirroring.

**6.** Screw elements according to Claim 5, each profile portion being made up of a number of arcs of a circle, **characterized in that** the number of arcs that form one of the profile portions is preferably 2 to 8, particularly preferably 3 to 6.

**7.** Screw elements according to Claim 5 or Claim 6, **characterized in that** one of the profile portions extends between a point ($P_A$, $P_A$'), which lies on the outer radius of the profile, and a point, which lies on the core radius of the profile, and comprises the at least one kink location.

**8.** Screw elements according to Claim 5 or Claim 6, **characterized in that** each profile portion comprises a continuously differentiable curve between two kink locations.

**9.** Screw elements according to one of Claims 1 to 8, **characterized in that** the ratio of a radius of curvature of the screw profile to the outer radius of the profile is 0.3 to 0.7, preferably 0.35 to 0.65, preferably at the point $P_A$ which cleans the barrel.

**10.** Method for producing screw elements according to one of Claims 1 to 9, for producing the screw profile a profile curve being created in a plane perpendicular to the axis of rotation, which profile curve has at least one kink location or a location of discontinuity in the slope of the curve along it, this location lying within an outer radius of the profile curve.

**11.** Method for producing screw elements according to Claim 10, **characterized in that**, in a first step for producing the screw profiles, a profile curve is created in a plane perpendicular to the axis of rotation, which profile curve has at least one kink location or a location of discontinuity in the slope of the curve along it, this location lying within an outer radius of the profile curve, and in a second step clearances are introduced.

**12.** Use of screw elements according to one of Claims 1 to 9 or produced according to Claim 10 or 11 in a screw machine.

**13.** Use according to Claim 12, **characterized in that** the screw elements clean in pairs with a constant gap over their entire circumference, or the screw elements cleaning in pairs with a gap that is not constant over the entire circumference.

**14.** Screw machine, in particular extruder, with paired co-directionally rotating screw shafts, **characterized in that** the screw shafts have screw elements according to one of Claims 1 to 9 or produced according to Claim 10 or 11.

**15.** Method for extruding plastic compositions, **characterized in that** screw elements according to one of Claims 1 to 9 or produced according to Claim 13 or 14 or a screw machine according to Claim 14 are used.

## Revendications

**1.** Eléments de vis pour des machines multi-vis avec des arbres de vis tournant par paires dans le même sens, dans lesquels ces éléments de vis se balaient exactement par paires et des arbres de vis composés de ces éléments de vis présentent deux ou plusieurs entrées de vis, dans lesquels les profils de vis peuvent être représentés sur toute la section transversale par des courbes de profil respectives, **caractérisés en ce que** chaque courbe de profil présente dans son allure au moins un point d'inflexion, qui est situé à l'intérieur d'un rayon extérieur de la courbe de profil, dans lesquels le rapport d'un rayon de courbure du profil de vis au rayon extérieur du profil au point $P_A$, qui balaie le boîtier, vaut 0,2 à 0,8, et le rapport du rayon extérieur ra de l'élément de vis à la distance d'axe en axe a pour des éléments de vis à deux entrées vaut entre 0,54 et 0,7, pour des éléments de vis à trois entrées entre 0,53 et 0,57, et pour des éléments de vis à quatre entrées entre 0,515 et 0,535.

**2.** Eléments de vis selon la revendication 1, **caractérisés en ce que** chaque courbe de profil est une courbe continue, fermée, convexe qui, à l'exception dudit au moins un point d'inflexion, peut aussi être différentiée en continu.

**3.** Eléments de vis selon la revendication 2, **caractérisés en ce que** le profil d'un premier élément de vis est formé par une courbe $\vec{p}$ et le profil de l'autre élément de vis est formé à partir de la courbe $\vec{q}$ selon l'équation suivante (1):

$$\vec{q} = \vec{p} + a \cdot \vec{n}(\vec{p}) + \vec{a} \quad (1)$$

dans laquelle

- la courbe $\vec{p}$ présente en chaque point un rayon de courbure $\rho$, qui est inférieur ou égal à une distance d'axe en axe a des éléments de vis,
- en chaque point de la courbe $\vec{p}$ à l'intérieur d'une partie pouvant être différentiée en continu, il existe un vecteur normal normalisé $\vec{n}(\vec{p})$ de longueur 1, qui au point respectif est perpendiculaire à la tangente à la courbe $\vec{p}$ et qui est orienté en direction du point central du cercle de courbure correspondant au point respectif de la courbe $\vec{p}$,
- $\vec{a}$ est un vecteur, qui conduit en direction du centre de rotation du profil générateur vers le centre de rotation du profil produit et qui a la longueur a.

**4.** Eléments de vis selon l'une quelconque des revendications 1 à 3, **caractérisés en ce que** chaque profil de vis ou chaque courbe de profil se compose de plusieurs arcs de cercle, dans lesquels les arcs de cercle respectifs forment l'un par rapport à l'autre audit au moins un point d'inflexion un angle compris entre 90° et 180°, de préférence entre 140° et 180°.

**5.** Eléments de vis selon l'une quelconque des revendications 1 à 4, **caractérisés en ce que** chaque profil de vis ou chaque courbe de profil peut être divisé(e) en parties de profil, qui peuvent se prolonger l'une dans l'autre par une symétrie ponctuelle ou axiale.

**6.** Eléments de vis selon la revendication 5, dans lesquels chaque partie de profil se compose de plusieurs arcs de cercle, **caractérisés en ce que** le nombre des arcs de cercle qui forment une des parties de profil vaut de préférence 2 à 8, de préférence encore 3 à 6.

**7.** Eléments de vis selon la revendication 5 ou la revendication 6, **caractérisés en ce qu'**une des parties de profil s'étend entre un point ($P_A$, $P_A$'), qui est situé sur le rayon extérieur du profil, et un point, qui est situé sur le rayon de noyau du profil, et qui comprend ledit au moins un point d'inflexion.

**8.** Eléments de vis selon la revendication 5 ou la revendication 6, **caractérisés en ce que** chaque partie de profil comprend une courbe pouvant être différentiée en continu entre deux points d'inflexion.

**9.** Eléments de vis selon l'une quelconque des revendications 1 à 8, **caractérisés en ce que** le rapport d'un rayon de courbure du profil de vis au rayon extérieur du profil vaut 0,3 à 0,7, de préférence 0,35 à 0,65, de préférence au point $P_A$, qui balaie le boîtier.

**10.** Procédé de fabrication d'éléments de vis selon l'une quelconque des revendications 1 à 9, dans lequel pour la formation des profils de vis, on produit une courbe de profil dans un plan perpendiculaire à l'axe de rotation, courbe de profil qui présente au moins un point d'inflexion ou un point de discontinuité dans la pente de la courbe dans son allure, dans lequel ce point est situé à l'intérieur d'un rayon extérieur de la courbe de profil.

**11.** Procédé de fabrication d'éléments de vis selon la revendication 10, **caractérisé en ce que** dans une première étape pour la formation des profils de vis, on produit une courbe de profil dans un plan perpendiculaire à l'axe de rotation, courbe de profil qui présente au moins un point d'inflexion ou un point de discontinuité dans la pente de la courbe dans son allure, dans lequel ce point est situé à l'intérieur d'un rayon extérieur de la courbe de profil, et dans une deuxième étape on introduit des jeux.

**12.** Utilisation d'éléments de vis selon l'une quelconque des revendications 1 à 9 ou produits selon la revendication 10 ou 11 dans une machine à vis.

**13.** Utilisation selon la revendication 12, **caractérisée en ce que** les éléments de vis se balaient par paires sur toute leur périphérie avec un écart constant, ou dans laquelle les éléments de vis se balaient par paires avec un écart qui n'est pas constant sur toute la périphérie.

**14.** Machine à vis, en particulier extrudeuse, avec des arbres de vis tournant par paires dans le même sens, **caractérisée en ce que** les arbres de vis présentent des éléments de vis selon l'une quelconque des revendications 1 à 9 ou produits selon la revendication 10 ou 11.

**15.** Procédé d'extrusion de masses plastiques, **caractérisé en ce que** l'on utilise des éléments de vis selon l'une quelconque des revendications 1 à 9 ou produits selon la revendication 13 ou 14 ou une machine à vis selon la revendication 14.

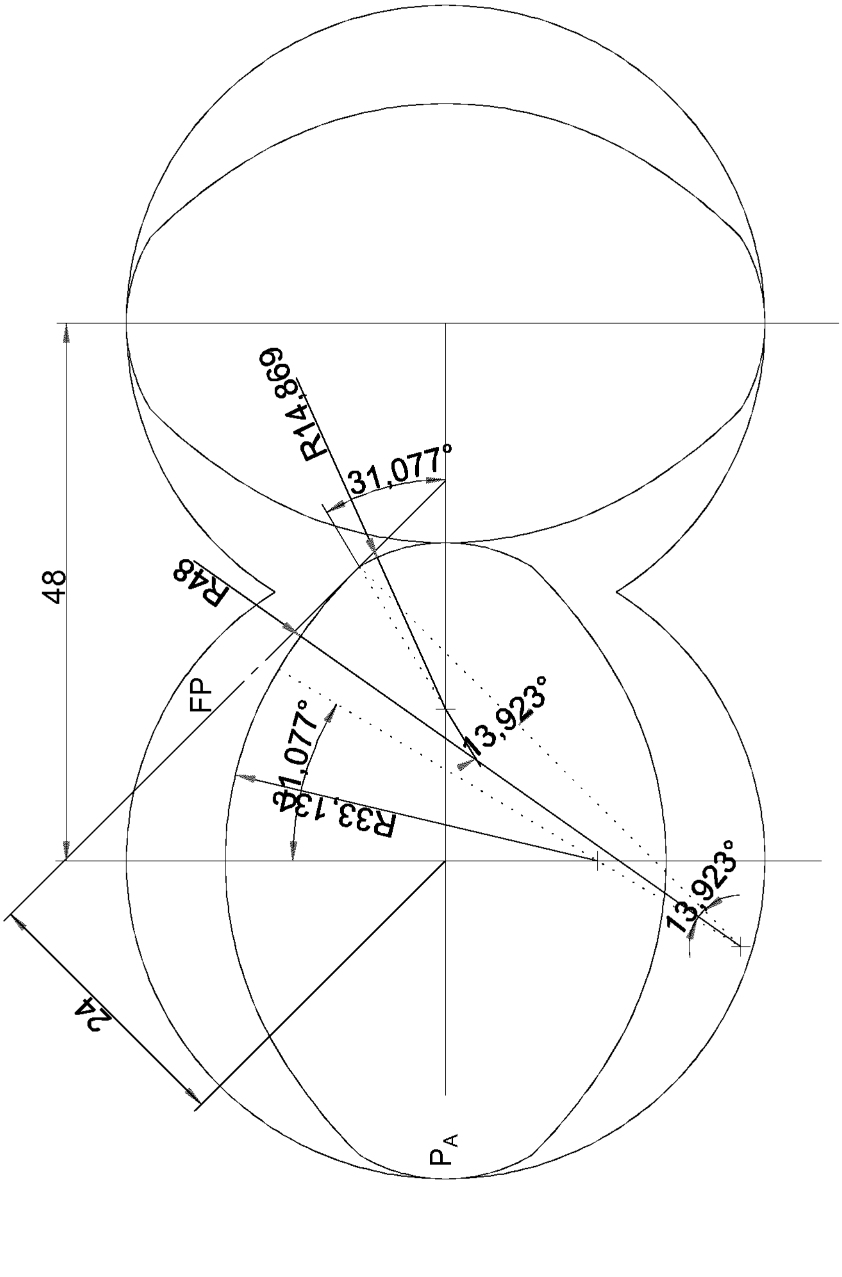


Fig. 1

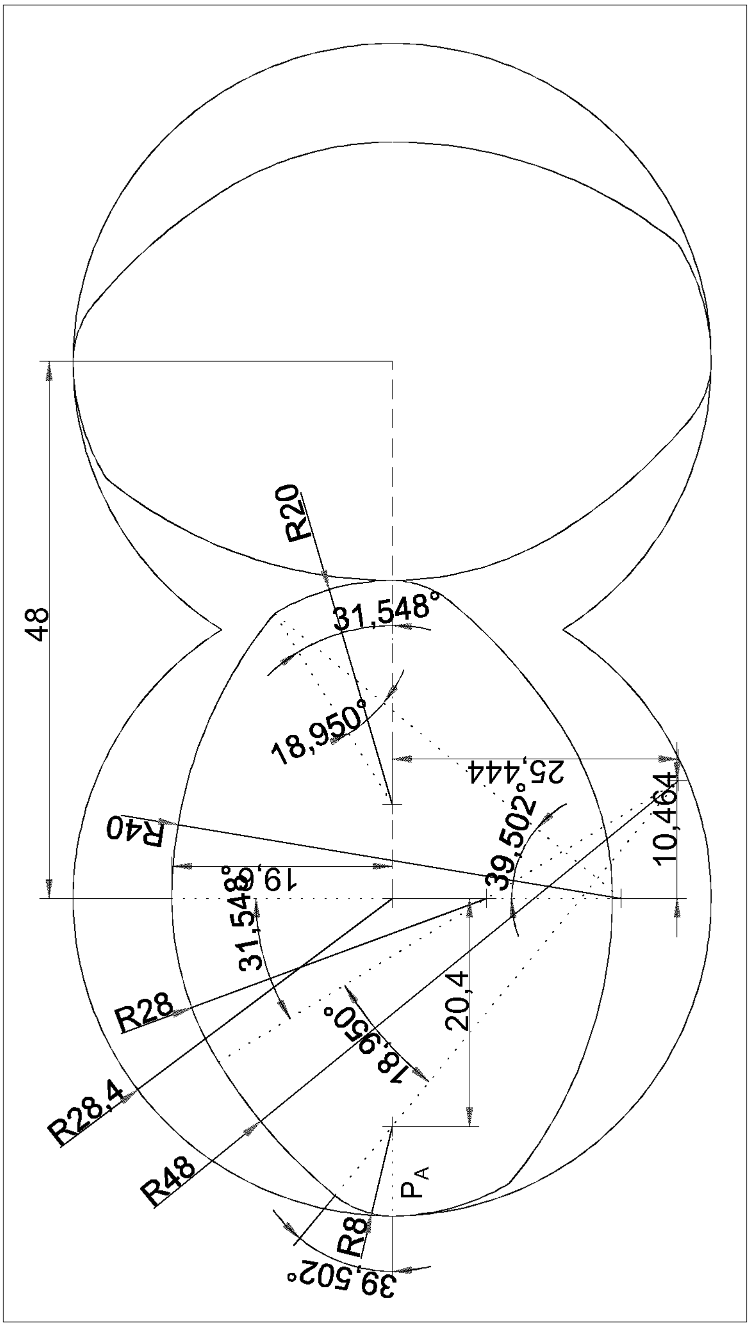
48
R20
31,548°
18,950°
25,444
10,464
R40
19,6
39,502°
31,548°
R28
R28,4
18,950°
20,4
R48
P_A
R8
39,502°

Fig. 2

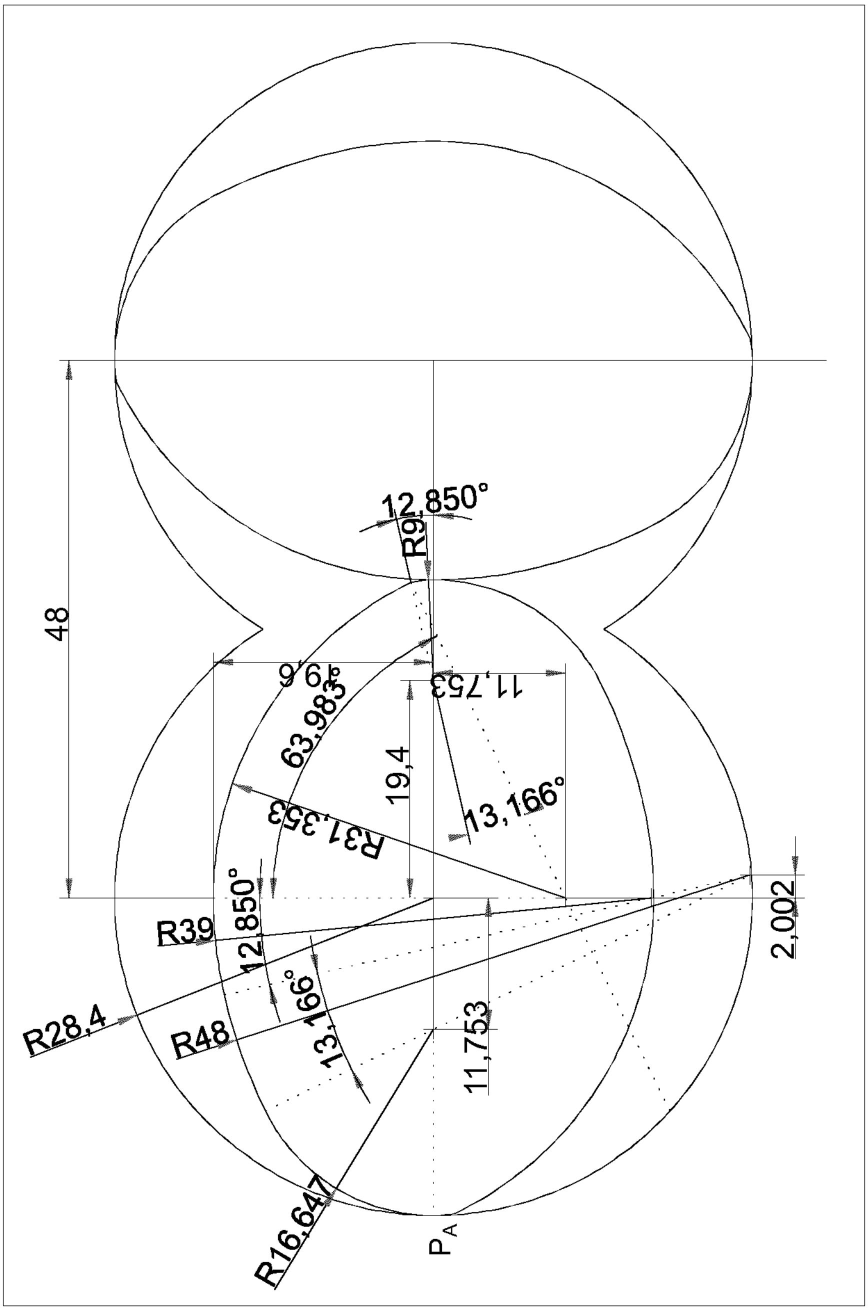
48
12,850°
R9
9,6
11,753
63,983°
19,4
R31,353
13,166°
R39
12,850°
R28,4
R48
13,166°
11,753
2,002
R16,647
P A

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 862668 C
- WO 2009152968 A1
- WO 2011069896 A1
- EP 1093905 A2
- DE 102008026862 A1
- EP 0875356 A2
- EP 0002131 A1
- WO 2001006516 A1
- DE 102008029303


### In der Beschreibung aufgeführte Nicht-Patentliteratur


- **KLEMENS KOHLGRÜBER.** Der gleichläufige Doppelschneckenextruder. Hanser Verlag, 2007, 96-109
- **CHANG DAE HAN.** Multiphase Flow in Polymer Processing. Academic Press, 1981
- **M. S. FLOATER.** Derivatives of Rational Bezier Curves. *Comp. Aid. Geom. Design,* 1992, vol. 9, 161-174